# EUROPEAN PATENT SPECIFICATION

(11) **EP 2 742 753 B1**
(45) Date of publication and mention of the grant of the patent: **20.11.2019**
(21) Application number: 11743080.1
(22) Date of filing: 12.08.2011
(51) Int. Cl.: H04W 72/04, H04W 72/02, H04W 72/12

(54) **RESOURCE RECONFIGURATION FOR UPLINK TRANSMISSION**
NEUKONFIGURATION VON RESSOURCEN FÜR UPLINK-ÜBERTRAGUNG
RECONFIGURATION DE RESSOURCES POUR LA TRANSMISSION EN LIAISON MONTANTE

(43) Date of publication of application: 18.06.2014
(73) Proprietor: Nokia Solutions and Networks Oy, 02610 Espoo (FI)
(72) Inventor: HOOLI, Kari Juhani, FIN-90540 Oulu (FI); LUNTTILA, Timo Erkki, FIN-02200 Espoo (FI); TIIROLA, Esa Tapani, FIN-90450 Kempele (FI); PAJUKOSKI, Kari Pekka, FIN-90240 Oulu (FI)
(74) Representative: Browne, Robin Forsythe
(86) International application number: PCT/EP2011/063982
(87) International publication number: WO 2013/023681

(56) References cited:
- "LTE; Evolved Universal Terrestrial Radio Access (E-UTRA); Physical layer procedures (3GPP TS 36.213 version 10.2.0 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 1, no. V10.2.0, 1 June 2011 (2011-06-01), XP014066384,
- "LTE; Evolved Universal Terrestrial Radio Access (E-UTRA); Medium Access Control (MAC) protocol specification (3GPP TS 36.321 version 10.2.0 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 2, no. V10.2.0, 1 June 2011 (2011-06-01), XP014066400,
- "LTE; Evolved Universal Terrestrial Radio Access (E-UTRA); Radio Resource Control (RRC); Protocol specification (3GPP TS 36.331 version 10.2.0 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 2, no. V10.2.0, 1 July 2011 (2011-07-01), XP014066403,
- PANASONIC: "Comparison of Orthogonal/Non-orthogonal CoMP transmission for PUCCH", 3GPP DRAFT; R1-093460, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090818, 18 August 2009 (2009-08-18), XP050351730, [retrieved on 2009-08-18]
- PANASONIC: "Discussion on PUCCH coordination for UL CoMP", 3GPP DRAFT; R1-091165, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090317, 17 March 2009 (2009-03-17), XP050338786, [retrieved on 2009-03-17]

## Description

### Field

The invention relates to the field of radio communications and, particularly, to reconfiguring uplink resources.

### Background

A modern wireless communication environment comprises several wireless transceivers operating on the same frequency band. The wireless transceivers may even have the same functionality, e.g. they may all operate as base stations providing terminal devices with wireless communication services. The base stations may operate on the same geographical area, e.g. a macro cell may controlled by a macro cell base station and multiple smaller-sized cells operated by femto cell base stations. Furthermore, the same radio spectrum may be used by other systems. Operating in such a communication environment requires fast adaptation of radio resources to fluctuating channel conditions.

Prior art is:
- "LTE; Evolved Universal Terrestrial Radio Access (E-UTRA); Physical layer procedures (3GPP TS 36.213 version 10.2.0 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 1, no. V10.2.0, 1 June 2011 (2011-06-01), XP014066384,
- "LTE; Evolved Universal Terrestrial Radio Access (E-UTRA); Medium Access Control (MAC) protocol specification (3GPP TS 36.321 version 10.2.0 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 2, no. V10.2.0, 1 June 2011 (2011-06-01), XP014066400,
- "LTE; Evolved Universal Terrestrial Radio Access (E-UTRA); Radio Resource Control (RRC); Protocol specification (3GPP TS 36.331 version 10.2.0 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 2, no. V10.2.0, 1 July 2011 (2011-07-01), XP014066403,
- PANASONIC: "Comparison of Orthogonal/Non-orthogonal CoMP transmission for PUCCH", 3GPP DRAFT; R1-093460, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090818, 18 August 2009 (2009-08-18), XP050351730,
- PANASONIC: "Discussion on PUCCH coordination for UL CoMP", 3GPP DRAFT; R1-091165, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090317, 17 March 2009 (2009-03-17), XP050338786.

### Brief description

According to an aspect of the present invention, there is provided a method as specified in claim 1 and a method as specified in claim 7.

According to another aspect of the present invention, there is provided an apparatus as specified in claim 9 and an apparatus as specified in claim 15.

According to another aspect of the present invention, there is provided an apparatus as specified in claim 17.

According to yet another aspect of the present invention, there is provided a computer program product embodied on a computer readable distribution medium as specified in claim 18.

Embodiments of the invention are defined in the dependent claims.

### List of drawings

Embodiments of the present invention are described below, by way of example only, with reference to the accompanying drawings, in which
Figure 1 illustrates a communication environment to which embodiments of the invention may be applied;
Figures 2 and 3 illustrate flow diagrams of processes for reconfiguring uplink transmission resources according to embodiments of the invention;
Figure 4 illustrates an embodiment of radio resources;
Figures 5 to 7 illustrate embodiments for requesting the reconfiguration of the uplink transmission resource and for reconfiguring the uplink transmission resources;
Figure 8 illustrates a flow diagram for selecting new uplink transmission resources according to an embodiment of the invention; and
Figures 9 and 10 illustrate apparatuses according to embodiments of the invention.

### Description of embodiments

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

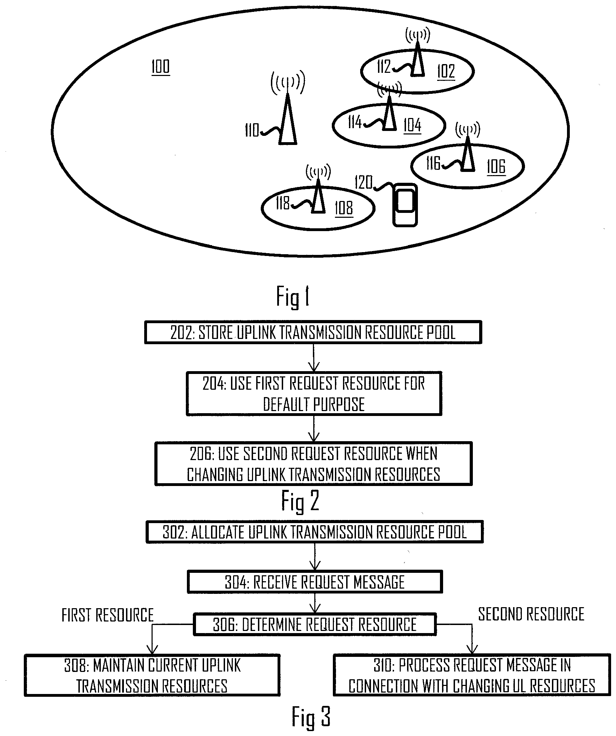

Some embodiments of the invention relate to a communication scenario illustrated in Figure 1. Referring to Figure 1, a macro cell base station 110 provides a terminal device 120 (and other terminal devices) with wireless communication services in its coverage area called a macro cell 100. Within the coverage area of the macro cell base station 110, there exist other base stations 112 to 118 that may be micro, pico, or femto cell base stations having a smaller coverage areas (cells 102, to 108, respectively). Development of modern cellular telecommunication systems, e.g. Universal Mobile Telecommunication System (UMTS) and its long-term evolution versions (LTE and LTE-Advanced), has been focused on utilizing these multiple transmission and reception points realized by the base stations 110 to 118 in coordinated multipoint (CoMP) transmission to enhance, for example, cell-edge data rates. CoMP techniques involve increased collaboration between the base stations in downlink transmission as well as in reception of uplink data and signalling traffic from the terminal device 120.

Different CoMP schemes can be categorized in various ways. One example is via cell identity: In a first option, each transmission/reception point forms independent cell. A special case of the first option is called "single carrier cell aggregation". The basic idea is to utilize carrier aggregation principles and signalling mechanisms to a large extent but to have the logically different cells operating on the same carrier frequency. In this option, the terminal device 120 considers each base station 110 to 118 as a separate cell. In a second option, all coordinated transmission/reception points are part of single logical cell. The terminal device then considers the different transmit/receive points (base stations 110 to 118) as different antenna ports of the same cell.

One example of a CoMP scenario is depicted in Figure 1. Within the coverage area of the macro cell basestation 110, there are altogether four micro-cell type of hotspots represented by the base stations 112 to 118 and associated cells 102 to 108. In the following, this is called a CoMP coordination area. In this scenario, each micro hotspot may have a distinct cell identifier (ID) (the first option) or appear as antenna ports of the macro cell base station 110 (the second option).

Downlink transmission may be straightforward, but in uplink the concept of cell may be different. In the uplink of the UMTS LTE (Advanced), the "cell" defines an uplink reference signal sequence or sequence group and randomization patterns, e.g. time and frequency hopping patterns, to be used in the uplink transmission of data and control signals. Furthermore, uplink signals may be received frequently at multiple transmissio/reception (Tx/Rx) points in the deployment scenario shown in Figure 1, and with variable reception power. This may be categorized as follows: an uplink signal from the terminal device 120 is received at relatively the same strength at multiple Tx/Rx points (base stations 110 to 118). In this case, it is feasible to use these multiple Tx/Rx points in the signal detection. Then, the terminal device may be configured to have resource allocation which is orthogonal with respect to the other terminal devices in the CoMP coordination area. The resource allocation may relate to physical uplink shared channel (PUSCH) resources, demodulation reference signal (DM RS) sequence, and/or physical uplink control channel (PUCCH) resources. In another scenario, the uplink signal from the terminal device 120 is received at one Tx/Rx point at considerably higher power than at the other Tx/Rx points. In this case, benefit from multi-point reception is reduced. Then, the benefits gained with the arrangement of the uplink transmission resources to be orthogonal with respect to the other terminal device over the CoMP coordination area are rather limited and overcome by drawbacks caused by the resource orthogonalisation: increased overhead in the PUCCH, increased spacing of channel samples available to the channel estimation, etc. In this scenario, it is more feasible to even enhance the isolation between the corresponding areas within the CoMP coordination area, e.g., by smart power control mechanisms as well as by randomization. In essence, PUSCH, DM RS, and PUCCH resource allocation would be considered as if these areas were separate cells.

As a consequence, in a mobile communication system there exist scenarios where better system performance may be achieved by changing the uplink transmission resources of the terminal device 120. Furthermore, as the environment may change rapidly, it may be advantageous to execute such changes as rapidly as possible, e.g. faster than through radio resource control (RRC) layer reconfiguration.

Figures 2 and 3 illustrate embodiments for controlling uplink transmission resource by utilizing physical layer signalling. Figure 2 illustrates a flow diagram of a process carried out in the terminal device 120, while Figure 3 illustrates a flow diagram of a process carried out in a network element, e.g. one of the base stations 110 to 118. Both processes may be realized by computer program products executed by a processor or a processing circuitry. Let us first focus on the operation of the terminal device 120 with reference to Figure 2. In block 202, an uplink transmission resource pool is stored in a memory of the terminal device 120. The uplink transmission resource pool may be selected and configured by a serving base station, e.g. the macro cell base station 110, and it comprises a plurality of different uplink transmission resources. The uplink transmission resource pool may also comprise a plurality of different uplink request resource options, wherein the options comprise at least a first resource and a second resource different from the first resource. In block 204, the terminal device is configured to use the first request resource to transmit request messages having a default purpose. For example, in an embodiment where the request message is a scheduling request, the function of the scheduling message when transmitted in the first resource is to request the base station to schedule an uplink transmission to the terminal device. In block 204, the currently allocated uplink transmission resources are used in the uplink transmissions.

Block 206 is executed in connection with changing the uplink transmission resources. In block 206, the terminal device is caused to transmit the request message in the second resource. The request message transmitted in the second resource may have at least one of the following functions: it is used to request the base station to change a currently allocated uplink transmission resource configuration; and to verify the change of the currently allocated uplink transmission resource configuration. For example, when the request message is the scheduling request, the functionality of the scheduling request in block 206 is not to request for the scheduling of the uplink transmission but to communicate in connection with changing the uplink transmission resources. As a consequence, the request message is configured to have two functionalities, and a request resource in which the terminal device transmits the request message determines the functionality. In an embodiment, each request message has only one functionality at a time, e.g. each request message serves only to function according to its default purpose or to function as a signalling element related to the changing the uplink transmission resources.

Let us now turn to the operation of the network element or a network apparatus, e.g. the macro cell base station 110. Referring to Figure 3, in block 302 a plurality of different uplink request resources comprising at least a first resource and a second resource are allocated to the terminal device 120. In block 304, a request message is received from the terminal device 120 in an uplink request resource. In block 306, the uplink scheduling request resource in which the scheduling request was received is determined. If the scheduling request was received in the first resource, the process proceeds to block 308 in which an uplink transmission is scheduled to the terminal device, and the uplink transmission is to be made in currently allocated uplink transmission resources. On the other hand, if the scheduling request was received in the second resource, the process proceeds to block 310 in which the request message is processed as a part of a procedure of changing the uplink transmission resources of the terminal device. In an embodiment, the request message is determined to be a request for changing the uplink transmission resources and, in response to that determination, the base station changes the uplink transmission resources of the terminal device 120. In another embodiment, the request message is determined to be verification that the terminal device has applied the changes to the uplink transmission resources and, in response to that determination, the base station verifies that the terminal device has successfully completed the uplink transmission resource reconfiguration.

The above-described embodiments may utilize fast physical layer signalling to carry out the change of the uplink transmission resources. In particular, the terminal device 120 is assigned with multiple request resources, wherein one resource (the first resource) is used for regular requests and the other resource (the second resource) is for changing the uplink transmission parameters. In an embodiment where the request message is the scheduling request and where the request resources are scheduling request resource, the terminal device 120 transmits the scheduling request in the first resource when the terminal device 120 has uplink data buffered for transmission. Thus, the terminal device 120 requests the base station to schedule an uplink transmission by transmitting the scheduling request in the first resource. This scheduling request may be carried out according to state of the art. In some embodiments of the UMTS LTE, mere transmission of arbitrary radio frequency power in the first resource on the PUCCH indicates the scheduling request, while in other embodiments the signal in the first resource may be a modulated and encoded symbol. On the other hand, transmission of the scheduling request in the second resource indicates the request for changing the uplink transmission resource or verifying that the terminal device 120 has applied new uplink transmission resources.

While the following description focuses on using the scheduling request(s) as the request message and the scheduling request resources as the request resources, in other embodiments other types of request messages and request resources are used, e.g. random access messages and random access preamble resources. In such an embodiment, the terminal device 120 may be provided with a plurality of random access preamble sequences comprising a first sequence and a second sequence. The terminal device 120 may use the first sequence for conventional random access purposes, while the terminal device may use the second sequence in relation to the changing the uplink transmission resources. In a general form, it is sufficient that the request message enables identification of the terminal device and that the base staton may determine the purpose of the request message from the request resource in which the request message is transmitted by the terminal device 120 and received by the base station 110. Therefore, it should be appreciated that in the following embodiments related to the scheduling request and scheduling request resources, another type of request message and other types of request resources may be used instead.

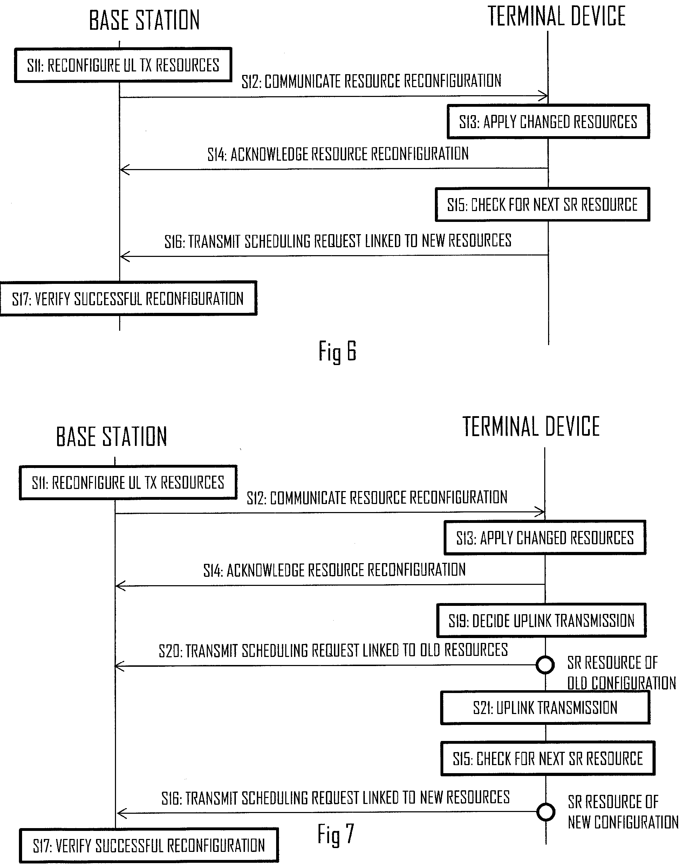

Above, it has been mentioned that the second resource may be used in connection with the terminal device 120 requesting and/or verifying the change of the uplink transmission resources. In an embodiment, the terminal device requests for the change of the uplink transmission resources by transmitting the request message on the second resource. Then, the base station reconfigures the uplink transmission resources and transmits a reconfiguration message to the terminal device. The terminal device may acknowledge the reconfiguration message by using only an acknowledgment message other than the request message transmitted on the second resource. In another embodiment, the terminal device also acknowledges or verifies the acknowledgment (see the embodiment of Figures 6 and 7 below) by using the request message in the second resource, in addition to using the request message in the second resource to request for the change. In yet another embodiment, the base station determines to change the uplink transmission resource by its own initiative or as being triggered by an event other than the request originated from the terminal device. Then, the terminal device acknowledges or verifies the acknowledgment by using the request message in the second resource without using the request message to request for the change of the uplink transmission resources. These embodiments are discussed in greater detail below.

In an embodiment, the uplink transmission resources that may be changed according to embodiments, comprise at least one of the following: an uplink demodulation reference signal (DM RS) sequence, an uplink demodulation reference signal sequence group comprising a plurality of DM RS sequences, a frequency and/or time hopping pattern for uplink transmission, periodic channel quality indicator (CQI) resources, periodic physical downlink shared channel (PDSCH) precoded matrix indicator (PMI) resources, rank indicator (RI) reporting resources, acknowledgment message (ACK/NAK) resources for a semi-persistently scheduled PDSCH resource, PUCCH transmission resources specifying PUCCH frequency resource blocks, and physical resource block(s) (PRB) allocated to the terminal device for uplink data transmission on a physical uplink shared channel (PUSCH), for example. At least some of these uplink transmission resources may be configured as static or semi-static parameters. In an embodiment, multiple uplink transmission resource configuration may be provided to only some, not all, periodic and/or semi-persistently scheduled uplink signals. Only one uplink transmission resource configuration may be kept active at a time, except during a transition phase during the change of the configuration in some embodiments, as described in greater detail below.

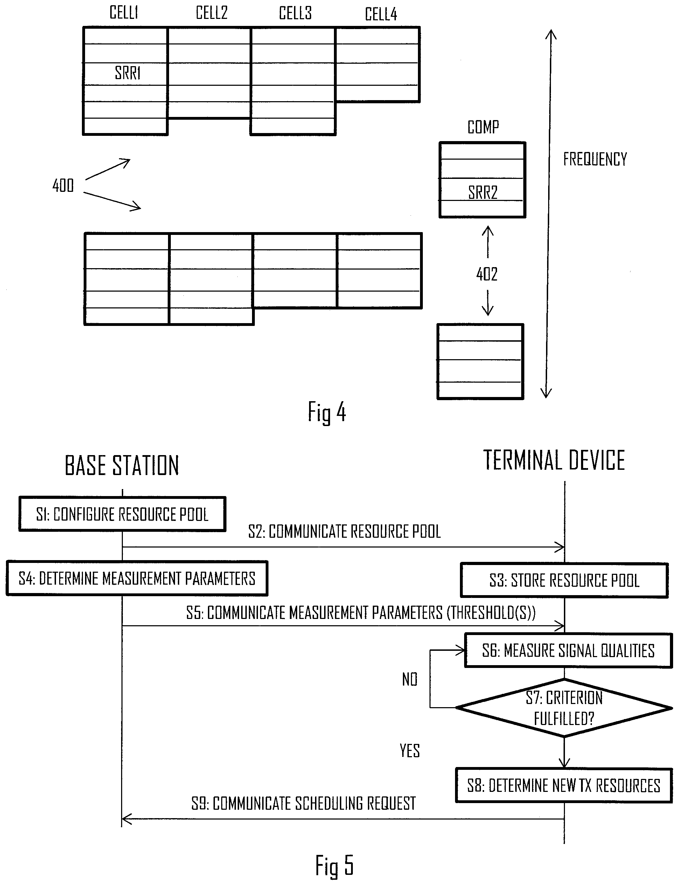

In an embodiment, the terminal device 120 indicates with the scheduling request resource in which the scheduling request is transmitted whether to maintain or change the uplink transmission resources. As a consequence, at least two different uplink scheduling request resources are allocated to the terminal device: one for a conventional scheduling request, and the other for requesting the change of the uplink transmission resources. In another embodiment, the uplink transmission resource pool comprises more than two uplink transmission resource configurations. The different configurations may be realized by different combinations of the above-mentioned uplink transmission resources. In order to enable the terminal device 120 to refer to each uplink transmission resource configuration, each uplink transmission resource configuration may be linked to a different uplink scheduling request resource. As a consequence, the terminal device 120 may request transition to a specific uplink transmission resource configuration by identifying the requested uplink transmission resource configuration with the uplink scheduling request resource in which the transmission of the scheduling request is caused. The base station processing the scheduling request and using the same linking or mapping between the scheduling request resources and the uplink transmission resource configurations is equally able to directly determine the requested uplink transmission resources from the scheduling request resource in which the scheduling request was received. Figure 4 illustrates an embodiment of PUCCH structuring where the terminal is assigned with multiple scheduling request resources denoted by SRR1 and SRR2. In Figure 4, each "box" represents a physical PUCCH frequency resource block. The uplink transmission resources comprise non-orthogonal uplink transmission resources 400 that are used simultaneously by a plurality terminal devices located in cells 100 to 108, and orthogonal uplink transmission resources 402 that may be used for CoMP purposes in the cells 100 to 108. The base stations 110 to 118 or cells 100 to 108 using the non-orthogonal resource pool 400 use the same physical frequency resource blocks but different reference signal sequences and different randomization patterns, e.g. a cyclic shift time-frequency hopping pattern and/or a reference signal sequence-hopping pattern. The orthogonal resource pool 402 provides resources that are orthogonal over the CoMP coordination area, e.g. the macro cell 100, or at least amongst a plurality of Tx/Rx points, e.g. base stations 110 to 118 or a subset of them. Therefore, the orthogonal resource pool 402 may be used when joint reception by a plurality of Tx/Rx points is selected. One of the uplink transmission resource configurations may be default configuration which is used or requested by the terminal device unless there is a specific incentive for using other resources.

In this embodiment, the uplink transmission resource pool allocated to the terminal device 120 comprises an orthogonal uplink transmission resource configuration using resources 402 and a non-orthogonal uplink transmission resource configuration using resources 400. The terminal device 120 may also be assigned with two different scheduling request resources, wherein one scheduling request resource is mapped to the non-orthogonal uplink transmission resource configuration, and the other scheduling request resource configuration is mapped to the orthogonal uplink transmission resource configuration. In an embodiment, both scheduling request resources are allocated to the non-orthogonal PUCCH resources 400. In another embodiment, the scheduling request resource linked with the non-orthogonal uplink transmission resource configuration is allocated to the non-orthogonal PUCCH resources 400, while the scheduling request resource linked with the orthogonal uplink transmission resource configuration is allocated to the orthogonal PUCCH resources 402. Yet in another embodiment, both scheduling request resources are allocated to the orthogonal PUCCH resources 402. In yet another embodiment, the scheduling request resource linked with the orthogonal uplink transmission resource configuration is allocated to the non-orthogonal PUCCH resources 400, while the scheduling request resource linked with the non-orthogonal uplink transmission resource configuration is allocated to the orthogonal PUCCH resources 402.

The decision whether to maintain or request the change of the uplink transmission resource configuration of the terminal device (block 204) may be made on the basis of reception signal quality measurements, as described in greater detail below. This helps in reacting quickly to the changing radio environment. In another embodiment, the change of the uplink transmission resources is triggered by other means, e.g. observation of decreased channel quality in the currently used uplink transmission resource configuration.

Let us now refer to a signalling diagram of Figure 5 illustrating an embodiment of changing the uplink transmission resources as a result of signal quality measurements carried out in the terminal device or user equipment (UE). In S1, the base station, e.g. evolved Node B or eNode B according to the UMTS terminology, selects the uplink transmission resource pool for the terminal device. The resource pool may comprise a plurality of different uplink transmission resource configurations, e.g. an orthogonal and a non-orthogonal uplink transmission resource configuration. In S2, the base station transmits the resource pool to the terminal device. The resource pool may be determined on the RRC layer and transmitted to the terminal device via RRC signalling. Upon reception of the resource pool, the terminal device stores the resource pool in its memory in S3 (see block 202 of Figure 2). The base station may also specify an initial uplink transmission resource allocation to the terminal device. The terminal device may then use this uplink transmission resource allocation at first in uplink transmissions.

In S4, the base station selects measurement parameters for the terminal device. The measurement parameters may comprise at least one threshold that is used by the terminal device in block 204 when determining the uplink transmission resources. The use of the thresholds is discussed in greater detail below. In S5, the base station communicates the measurement parameters to the terminal device. In another embodiment, the measurement parameters identify those Tx/Rx points included in the measurements. For example, the macro cell base station 110 may specify the other base stations 112 to 118 in the measurement parameters. Upon reception of the measurement parameters, the terminal device may start measuring reception signal qualities of signals received from different Tx/Rx points, e.g. the base stations 110 to 118. In S6, the terminal device measures the reception signal qualities. The reception signal quality may be measured from pilot signals received from the Tx/Rx points. The reception signal quality may be any one of the following: reception signal power, signal-to-noise ratio (SNR) signal-to-noise-plus-interference ratio (SINR), and a path loss estimate.

In S7, the terminal device determines whether or not a criterion for changing the current uplink resource configuration is fulfilled. This determination may be made on the basis of a comparison between the measured reception signal qualities and said at least one threshold received from the base station. In other embodiments, the threshold(s) is/are fixed and, thus, the terminal device needs not to receive the threshold(s) from the base station. In another embodiment, no thresholds are used and, instead, the reception signal qualities associated with different Tx/Rx points are compared with one another, and the criteria is based on the comparison between the reception signal qualities. If the determined criterion for changing the uplink transmission resource configuration is not fulfilled in S7, the process returns to S6. However, if the criterion is fulfilled, the process proceeds to S8 in which the terminal device determines the new uplink transmission resource configuration that provides the best match with the environment represented by the reception signal qualities. The terminal device may store mapping between different reception signal quality measurements and associated uplink transmission resource configurations. Upon determining the new uplink transmission resources, the terminal device determines from the stored resource pool a scheduling request resource that is linked with the determined new uplink transmission resource configuration. Then, the terminal device transmits the scheduling request in the corresponding scheduling request resource in S9. The base station receives the scheduling request in S9 and processes the request so as to change the uplink transmission resource configuration of the terminal device.
Figure 6 illustrates an embodiment of the procedure after the terminal device has requested the change of the uplink transmission resource configuration, as described above with reference to Figure 2 or 5. Upon reception of the scheduling request from the terminal device in a scheduling request resource that indicates the request for changing the uplink transmission resources, the base station reconfigures the uplink transmission resources of the terminal device in S11. S11 may comprise selecting and storing the requested uplink transmission resource configuration as associated with the terminal device. S11 may also comprise verification whether or not the change is possible. The verification may comprise checking for possible conflicts caused by the new uplink transmission resource configuration. For example, the base station may request the terminal device to transmit a full aperiodic multi-cell CQI report to determine the channel experienced by the terminal device and to determine whether the reconfiguration is feasible. In another embodiment, the base station may consider the request received in S9 as a small multi-cell CQI report. As a consequence, the base station may omit the request for the multi-cell CQI report. In general, this may reduce the frequency with which the base station requests for the aperiodic multi-cell CQI reports. For example, upon reception of the scheduling request in S9, the base station may postpone the transmission of the request for the next aperiodic multi-cell CQI report. This reduces downlink signalling overhead.

Let us now assume that no conflicts exist and that the new uplink transmission resources may be allocated to the terminal device. As a consequence, the base station transmits in S12 a resource reconfiguration message to the terminal device, thus approving the request and indicating that the uplink transmission resources are changed from the currently used uplink transmission resources to those determined in S8 and requested in S9. The resource reconfiguration message transmitted in S12 may be a physical layer (L1) control message transmitted on a physical downlink control channel (PDCCH) or as a control signal message on a physical downlink shared channel (PDSCH). In another embodiment, the resource reconfiguration message is transmitted on a medium access control (MAC) layer as MAC signalling on Layer 2. As the reconfiguration of the uplink transmission resources is carried out by using L1/L2 signalling alone, the signalling and the reconfiguration may be made significantly faster than through higher layer RRC signalling.

Upon reception of the resource reconfiguration message from the base station, the terminal device applies the changes in the uplink transmission resources in S13, e.g. changes the uplink transmission resource configuration from the current configuration to the new configuration being requested and approved. In S14, the terminal device acknowledges the reception of the resource reconfiguration message on an appropriate control channel, e.g. PUCCH. The channel on which the acknowledgment is transmitted may be a channel used to acknowledge any control message that is transmitted on the channel on which the reconfiguration message was communicated in S12.

Thereafter, the terminal device determines to verify the acknowledgment of S14 in order to improve the reliability of the resource reconfiguration. In S15, the terminal device checks for the next possible scheduling request resource linked with the new uplink transmission resources applied in S13. In S16, the terminal device transmits a scheduling request in the scheduling request resource linked to the new uplink transmission resources taken into use in S13. In an embodiment, the scheduling request transmitted in S16 is the same or a corresponding scheduling request resource in which the scheduling request was transmitted in S9. In another embodiment, the scheduling request is transmitted in S16 in a different scheduling request resource in which the scheduling request was transmitted in S9. In the latter embodiment, the scheduling request used for requesting to change the uplink transmission resources is different from the scheduling request resource used for requesting subsequent uplink transmission after the change. For example, the scheduling request used for requesting to change the uplink transmission resources may be seen as a toggle that triggers the change to a next uplink transmission resource configuration in a sequence of uplink transmission resource configurations. The transmission of the scheduling request in the new uplink transmission resources in S16 functions as a verification acknowledgment message that the terminal device has successfully received the reconfiguration message in S12 and changed the uplink transmission resources appropriately. This double-acknowledgment improves the reliability of the reconfiguration more than when using a conventional single acknowledgment message of S14. In S17, upon reception of the scheduling request linked to the newly applied uplink transmission resources, the base station verifies that the terminal device has made the reconfiguration. After the reception of the acknowledgment in S14, the base station may monitor for the subsequent scheduling request and consider the scheduling request received in S16 as the reacknowledgment. The base station may monitor for the verification even if it has detected a negative acknowledgment (NAK) in S14 or if it has detected no acknowledgment in S14. In an embodiment, the base station may consider the scheduling request received in S16 as the reacknowledgment, and the subsequent scheduling requests according to the new uplink transmission resource configuration are conventional scheduling requests requesting scheduling of the uplink transmission. After S16, the terminal device may use the subsequent scheduling request resource for their default purpose, e.g. to request for scheduling of uplink transmission.

With respect to the verification of the acknowledgment of the reconfiguration of the uplink transmission resources, an arbitrary number of consecutive scheduling requests according to the newly applied uplink transmission resources may be used. For example, the number of the consecutive scheduling request resources of the new configuration used for the verification after the reconfiguration of S13 may be two, three, or even four. This provides double, triple, or even quadruple verification of the acknowledgment which further improves the reliability of the reconfiguration. In an embodiment, the terminal device transmits a predetermined fixed number of verifications, while the base station verifies the correct reception of the reconfiguration from any one of these scheduling requests even if it has erroneously detected the acknowledgment of S14 as a negative acknowledgment or even missed the detection of the acknowledgment in S14. The base station is also aware of the number of the consecutive scheduling request resources used for the verification and does not consider them as conventional uplink scheduling requests, except in the embodiments where these scheduling requests function as both the verification and the conventional scheduling request.

In yet another embodiment, the verification of the acknowledgment of a reconfiguration message may be expanded to other reconfigurations. In practice, an acknowledgment to an arbitrary reconfiguration signalled by the base station and acknowledged by the terminal device may be verified by using a subsequent scheduling request resource to transmit a scheduling request as the verification for the acknowledgment. As a consequence, the reliability of reconfiguration of any transmission parameter signalled by the base station may be improved.

Figure 7 illustrates a signaling diagram of an embodiment in which the terminal device is configured to utilize the old uplink transmission resources after the reconfiguraiton until a scheduling request resource linked to the new uplink transmission resources becomes available. It may be that after the reconfiguration a scheduling request resource linked to the old uplink transmission resources becomes available before the scheduling request resource linked to the new uplink transmission resources and, therefore, this embodiment prevents waste of this transmission opportunity, thereby resuliting in a better spectrum utilization. In Figure 7, the steps denoted by the same reference signs as in Figure 6 represent the same or similar steps. Consequently, the base station reconfigures the uplink transmission resources of the terminal device in steps S11 and S12 (Figure 7), the terminal device applies and acknowledges the reconfiguration and the new uplink transmission resources in steps S13 and S14, respectively. However, the terminal device does not discard the old uplink transmission resources at this stage. Simlarly, the base station maintains the old uplink transmission resources associated with the terminal device. In an embodiment, the base station maintains the old uplink transmission resources until it has carried out the verification of S17.

In S19, the terminal device determines to request the base station to schedule an uplink transmission, and the terminal device then checks for the next scheduling request resource that may be used for the default purpose of the scheduling request. The terminal device checks for scheduling request resources of both old and new uplink transmission resource configuration. In this case, the scheduling request resource of the old uplink transmission resource configuration becomes available before the scheduling request resource of the new uplink transmission resource configuration, possibly because of at least some of the next scheduling request resources of the new configuration are reserved for the verification purposes. As a consequence, the terminal device transmits the scheduling request in the scheduling request resource of the old uplink transmission resource configuration in S20. The base station monitors for scheduling request resources of both old and new uplink transmssion parameter configuration and, accordingly, detects the scheduling request in S20. Then, the base station may schedule the uplink transmission by transmitting an appropriate scheduling grant message on a downlink control channel. In an embodiment, the base station does not consider this scheduling request as the verification. Upon reception of the scheduling grant, the terminal device carries out uplink transmission according to the old uplink transmission resource configuration in S21. The uplink transmission may be a data transmission.

Meanwhile, the terminal device carries out S15 in order to determine the next scheduling request resource according to the newly applied uplink transmission resource configuration and, upon determining the next scheduling request resource of the new uplink transmission resource configuration, the terminal device transmits the verification in the form of the scheduling request in S16. The scheduling request in the scheduling request resource linked to the new uplink transmission resource configuration also as the verification for the acknowledgment in the base station (S17). Up to the point of the last scheduling request resource dedicated to the verification procedure, the terminal device may be configured to use the scheduling request resources of the old (previous) uplink transmission resource configuration to request for the scheduling of the uplink transmission. As a consequence, the terminal device may continue the data transmission while the uplink transmission resource reconfiguration is being carried out. The uplink transmission resource reconfiguration may be considered as complete at the time of the last scheduling request resouce dedicated to the verification of the acknowledgment of the change uplink transmission resources.

It should be appreciated that the embodiments of the resource reconfiguration according to Figure 6 and Figure 7 may be carried out together with the embodiments of the terminal device requesting the change of the uplink transmission resources according to Figure 5. However, the base station may determine to change the transmission parameters according to another criterion (or criteria) and, in such embodiments, the resource reconfiguration according to Figure 6 and 7 may be carried out without the embodiment of Figure 5.

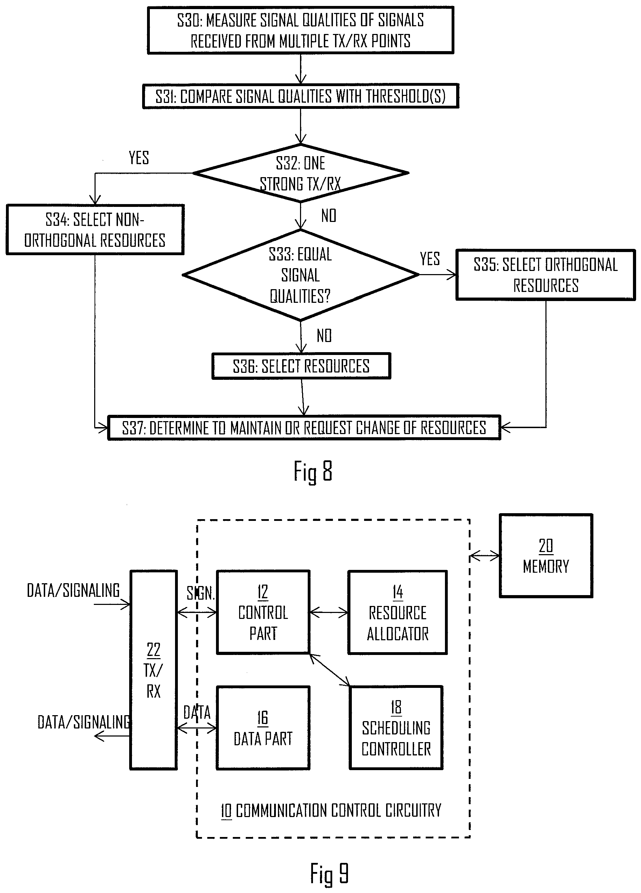

Let us now consider the embodiments of triggering the uplink transmission resource reconfiguration in the terminal device (S6 and S7 in figure 5) with reference to Figure 8. Let us assume as the initial condition that the terminal device has stored necessary parameters to carry out the above-mentioned reception signal quality measurements, e.g. at least one necessary threshold value and/or identifiers of those Tx/Rx points for which the measurements are to be carried out. Referring to Figure 8, the terminal device measures in S30 reception qualities of signals, e.g. pilot signals, received from a plurality of Tx/Rx points, e.g. base stations 110 to 118 comprised in the macro cell 100 or a subset of them. In S31, the terminal device compares the the signal qualities with at least one threshold. In S32, it is determined whether a signal received from a given Tx/Rx point has a higher signal quality than the signal qualities associated with the other Tx/Rx points by a determined margin determined by a first threshold. This may be carried out by comparing a difference between the highest signal quality value and the second highest signal quality value. In another embodiment, the highest signal quality value is compared with a mean of the other signal quality values. If the difference is higher than the first threshold, it means that there is significantly better channel quality with one Tx/Rx point than with the other Tx/Rx points and, therefore, it is feasible to select non-orthogonal uplink transmission resources. As a conseuqnece, the process proceeds to block S34 in which the non-orthogonal uplink transmission resources are selected.

On the other hand, if the result in S32 is that the highest signal quality value is not sufficiently better than the other signal quality values, the process proceeds to S33 in which it is determined whether or not the signal qualities are sufficiently similar with one another. The sufficiency may be determined by a second threshold defining a margin within which the reception signal quality values should be in order to be considered as sufficiently similar. This may be determined by comparing a difference between the highest and the lowest signal quality values with the second threshold. Upon determining that the signal quality values are within the similarity margin as defined by the second threshold, e.g. when the difference is lower than the second threshold, it is feasible to select orthogonal resources. As a consequence, the process proceeds to block S35 in which the orthogonal uplink transmission resources are selected. On the other hand, if the signal quality values show that there is neither a significantly stronger single Tx/Rx point nor that the signal quality values are sufficiently similar, the orthogonality of the uplink transmission resources may be considered not to be a relevant factor. Then, the process proceeds from S33 to S36 in which the uplink transmission resources are selected on the basis of another criterion. From S34, S35, and S36, the process proceeds to S37 in which the selected uplink transmission resources are compared with currently configured uplink transmission resources. If the selected uplink transmission resources and the current uplink transmission resources are the same, the process is terminated, or the process returns to S30 for a new iteration. On the other hand, if the comparison results in the detection that the selected uplink transmission resources are different from the currently applied uplink transmission resources, the process proceeds to 208 or a corresponding step where the request for changing the uplink transmission resources is initiated by transmitting a scheduling request in an appropriate scheduling request resource.

In a modification of the embodiment of Figure 8 S32 and S33 are mutually exclusive. Instead of two thresholds, a single threshold defining the similarity margin may be provided. As a consequence, steps S32 and S33 may be replaced by a single comparison with a single threshold. If this comparison results in the determination that there is a single stronger Tx/Rx point, the process proceeds to S34, while in other case the process proceeds to S35. Then, the comparison procedure is simplified, and S36 may be omitted.

Figure 9 illustrates an embodiment of an apparatus comprising means for carrying out the above-mentioned functionalities of the network apparatus, e.g. the base station, configuring the uplink transmission resources of the terminal device. The apparatus may be applicable to a cellular communication system described above and it may form part of the base station or another network element of such a system. In an embodiment, the apparatus is the base station or the other network element controlling radio resource of the terminal device. In another embodiment, the apparatus is comprised in such a network element, e.g. the apparatus may comprise a circuitry, e.g. a chip, a processor, a micro controller, or a combination of such circuitries in the network element and cause the network element to carry out the above-described functionalities, e.g. steps of Figure 3 or steps of the base station in Figures 5 to 7.

Referring to Figure 9, the apparatus may comprise a communication controller circuitry 10 configured to control the communications in the apparatus. The communication controller circuitry 10 may comprise a control part 12 handling control plane signaling in a cell, e.g. cell 100. For example, the control part 12 may control establishment, operation, and termination of cellular connections with terminal devices (e.g. the terminal device 120) and carry out radio resource control procedures in the cell. The control part 12 may have knowledge of the currently allocated uplink transmission resources of each terminal device. The control part 12 may be configured to process the received scheduling requests and to determine whether or not the scheduling requests are received in scheduling request resource linked to the current uplink transmission resources. The control part 12 may forward the scheduling requests received in the currently allocated uplink transmission resource configuration, or a note of the existence of such a scheduling request, to a scheduling controller circuitry 18 configured to schedule uplink transmissions. The operation of the scheduling controller circuitry 18 may be according to state of the art. The control part 12 may forward the scheduling requests not received in the currently allocated uplink transmission resource configuration, or a note of the existence of such a scheduling request, to a resource allocator circuitry 14 configured to process the requests for new uplink transmission resources, as described above. Any scheduling request, or a notification of existence of such a request, forwarded to the resource allocator circuitry 14 is considered as the request for the new uplink transmission resource allocation. As a consequence, the resource allocator circuitry 14 may check for the scheduling request resource in which the received scheduling request was received and allocate to a terminal device that sent the scheduling request new uplink transmission resource that match with the scheduling request resource of the scheduling request. Upon reconfiguring the uplink transmission resources of the terminal device, the resource allocator circuitry 14 may notify the control part 12 to forward an acknowledgment message of S14 and a determined number of subsequent scheduling requests (S16) according to the new uplink transmission resource confriguration to the resource allocator circuitry 14 so as to carr yout the verification of S17. Any subsequent scheduling request received in the new uplink transmission resources may be forwarded to the scheduling controller circuitry 18.

The communication controller circuitry 10 may further comprise a data part 16 that handles transmission and reception of payload data with the terminal devices. The data part 16 may forward data received from the terminal devices towards the core network and data received from the core network to the terminal devices. With respect to the connection with the core network of the cellular system, the apparatus may further comprise an input/output port (not shown) providing the apparatus with a bidirectional communication with other elements of the cellular system, e.g. with the core network. The input/output port may realize an IP connection or an S1 connection used in the UMTS LTE networks, for example.

The circuitries 12 to 18 of the communication controller circuitry 10 may be carried out by the one or more physical circuitries or processors. In practice, the different circuitries may be realized by different computer program modules. Depending on the specifications and the design of the apparatus, the apparatus may comprise some of the circuitries 12 to 18 or all of them.

The apparatus may further comprise one or more memories 20 that store computer programs (software) configuring the apparatus to perform the above-described functionalities of the network element or the base station. The memory 20 may also store communication parameters and other information needed for the wireless communications and/or to carry out the resource reconfiguration. For example, the memory 20 may store a list of nearby other Tx/Rx points that may be used for CoMP purposes and associated threshold value(s) for use in the signal quality measurements of the terminal devices. The apparatus may further comprise a communication interface 22 comprising radio interface components providing the apparatus with radio communication capabilities with the terminal devices and/or other network nodes, e.g. with other base stations 112 to 118. The radio interface components may comprise standard well-known components such as amplifier, filter, frequency-converter, (de)modulator, and encoder/decoder circuitries and one or more antennas.

In an embodiment, the apparatus carrying out the embodiments of the invention for controlling the uplink transmission resources comprises at least one processor and at least one memory including a computer program code, wherein the at least one memory and the computer program code are configured, with the at least one processor, to cause the apparatus to carry out the steps of the network element or the base station in any one of the processes of Figures 3 and 5 to 7. Accordingly, the at least one processor, the memory, and the computer program code form processing means for carrying out embodiments of the present invention in the network element.

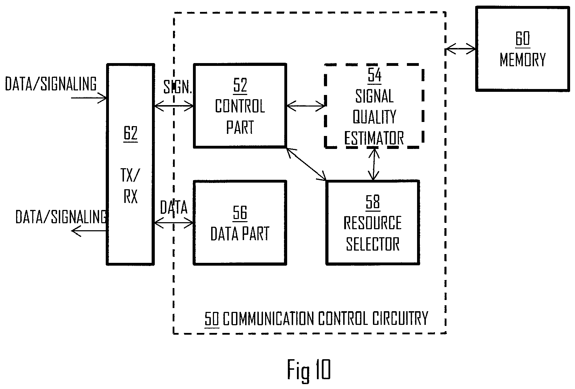

Figure 10 illustrates an embodiment of an apparatus comprising means for carrying out the above-mentioned functionalities of the terminal device, e.g. the terminal device 120. The apparatus may be a terminal device of a cellular communication system, e.g. a computer (PC), a laptop, a tabloid computer, a cellular phone, a communicator, a smart phone, a palm computer, or any other communication apparatus. In another embodiment, the apparatus is applicable to such a terminal device, e.g. the apparatus may comprise a circuitry, e.g. a chip, a processor, a micro controller, or a combination of such circuitries in the terminal device.

Referring to Figure 10, the apparatus may comprise a communication controller circuitry 50 configured to control the communications in the apparatus. The communication controller circuitry 50 may comprise a control part 52 handling control plane signaling with a serving base station, e.g. the macro cell base station 110, and optionally with other base stations 112 to 118 or communication devices including other terminal devices in direct device-to-device connections. For example, the control part 52 may control establishment, operation, and termination of cellular connections with the cellular network and carry out radio resource control procedures in the terminal device under the control of the cellular network. The communication controller circuitry 50 may further comprise a resource selector circuitry 58 configured to monitor for a triggering event that triggers reconfiguration of at least some of the uplink transmission resources. Such a triggering event may be an event in the performance of the communication quality of the terminal device and/or an event in a sensed channel environment. The communication controller circuitry 50 may comprise a signal quality estimator circuitry 54 configured to measure reception signal qualities, as described above. The signal quality estimator circuitry may carry out the steps S30 to S36 and output the results to the resource slector circuitry 58 carrying out step S37. In another embodiment, the signal quality estimator circuitry carries out only S30, and the resource selector circuitry carries out steps S31 to S37. With respect to the other embodiments, the resource selector circuitry may carry out steps 202 to 208, S2, S3, and S6 to S9 in the terminal device 120. Accordingly, upon determining to request for the change of the uplink transmission resource configuration, the resource selector circuitry 58 may determine the new uplink transmission resource configuration, determine a scheduling request resource associated with the new uplink transmission resource configuration, and configure the control part 52 to transmit a scheduling request in the determined scheduling request resources. Thereafter, the control part receives the reconfiguration message in S12, and it forwards the message to the resource selector circuitry 58. The resource selector circuitry 58 applies the new uplink transmission resource configuration (S13) and causes the control part 52 to transmit the acknowledgment message (S14). In some embodiments using the verification, the control part 52 is also configured to reserve a determined number of subsequent scheduling request resources of the new uplink transmission configuration to transmit the verifications in the form of the scheduling requests. As a consequence, the control part 52 may transmit the scheduling request(s) in the appropriate scheduling request resources regardless of whether or not the data buffer of the terminal device comprises uplink data waiting for the uplink transmission.

The communication controller circuitry 50 may further comprise a data part 56 that handles transmission and reception of payload data with the cellular network and/or with other base stations or terminal devices. The data part 56 may forward data received from an application executed in the terminal device towards the cellular network and data received from the cellular network to the application.

The circuitries 52 to 58 of the communication controller circuitry 50 may be carried out by the one or more physical circuitries or processors. In practice, the different circuitries may be realized by different computer program modules. Depending on the specifications and the design of the apparatus, the apparatus may comprise some of the circuitries 52 to 58 or all of them.

The apparatus may further comprise one or more memories 60 that stores computer programs (software) configuring the apparatus to perform the above-described functionalities of the communication device. The memory 60 may also store communication parameters and other information needed for the wireless communications and/or to carry out the resource reselection and/or reception quality measurements. For example, the memory 60 may store a list of Tx/Rx points for which the measurements are to be carried out and/or any threshold values needed for the measurements. The apparatus may further comprise a communicatio interface 62 comprising radio interface components providing the apparatus with radio communication capabilities with the cellular network and/or other base stations, e.g. with femtocell base stations, and/or with other terminal devices over direct device-to-device radio links. The radio interface components may comprise standard well-known components such as amplifier, filter, frequency-converter, (de)modulator, and encoder/decoder circuitries and one or more antennas. The apparatus may further comprise a user interface enabling interaction with the user of the communication device. The user interface may comprise a display, a keypad or a keyboard, a loudspeaker, etc.

In an embodiment, the apparatus carrying out the embodiments of the invention for proposing the aggregation comprises at least one processor and at least one memory including a computer program code, wherein the at least one memory and the computer program code are configured, with the at least one processor, to cause the apparatus to carry out the steps of the terminal device in any one of the processes of Figures 2 and 5 to 8. Accordingly, the at least one processor, the memory, and the computer program code form processing means for carrying out embodiments of the present invention in the terminal device.
As used in this application, the term 'circuitry' refers to all of the following: (a) hardware-only circuit implementations, such as implementations in only analog and/or digital circuitry, and (b) to combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) to circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular element, a baseband integrated circuit or applications processor integrated circuit for a mobile phone or a similar integrated circuit in server, a cellular network device, or other network device.

The processes or methods described in Figures 4 to 8 may also be carried out in the form of a computer process defined by a computer program. The computer program may be in source code form, object code form, or in some intermediate form, and it may be stored in some sort of carrier, which may be any entity or device capable of carrying the program. Such carriers include a record medium, computer memory, read-only memory, electrical carrier signal, telecommunications signal, and software distribution package, for example. Depending on the processing power needed, the computer program may be executed in a single electronic digital processing unit or it may be distributed amongst a number of processing units.

The present invention is applicable to cellular or mobile telecommunication systems defined above but also to other suitable telecommunication systems. In addition to the UMTS and any one of its evolution versions LTE and LTE-Advanced, cellular system may be based on International Mobile Telecommunication (IMT) standard or any one of its evolution versions (e.g. IMT-Advanced), Worldwide Interoperability for Microwave Access (WiMAX). Some embodiments may even be applicable to IEEE 802.11-based networks (e.g. IEEE 802.11n, 802.11af, or 802.11ac). However, the cellular system is not limited to these examples and it may be any other wireless network within the scope of the present claims. The protocols used, the specifications of mobile telecommunication systems, their network elements and subscriber terminals, develop rapidly. Such development may require extra changes to the described embodiments. Therefore, all words and expressions should be interpreted broadly and they are intended to illustrate, not to restrict, the embodiment.

It will be obvious to a person skilled in the art that, as technology advances, the inventive concept can be implemented in various ways. The invention and its embodiments are not limited to the examples described above but may vary within the scope of the claims.

## Claims

1. A method comprising:
storing, in a terminal device, a plurality of different uplink transmission resource configurations and a plurality of different uplink request resources comprising at least a first resource and a second resource;
causing transmission of a request message in the first resource to request a base station to carry out default procedures for processing a request associated with the request message;
causing transmission of the request message in the second resource to request the base station to change a currently allocated uplink transmission resource configuration and/or to verify the change of the currently allocated uplink transmission resource configuration.

2. The method of claim 1, further comprising:
determining, in the terminal device, whether to maintain currently allocated uplink transmission resource configuration or to request change of the currently allocated uplink transmission resource configuration;
upon determining to request the change of the currently allocated uplink transmission resource configuration, causing the transmission of the request message in the second resource.

3. The method of claim 2, further comprising:
linking each uplink transmission resource configuration to a different uplink request resource; and
identifying the requested uplink transmission resource configuration with the uplink request resource in which the request message is caused to be transmitted.

4. The method of any preceding claim 1 to 3, further comprising:
receiving from a network element a resource reconfiguration message identifying newly allocated uplink transmission resource configuration;
causing transmission of an acknowledgment for the change of the uplink transmission resource configuration on a control channel associated with the resource reconfiguration message; and
verifying the acknowledgment by transmitting a following request message on the second resource linked to the newly allocated uplink transmission resource configuration.

5. The method of any preceding claim, further comprising:
causing reception signal quality measurements of signals received from a plurality of base stations;
comparing the measured reception signal qualities with at least one threshold; and
determining, on the basis of said comparison, whether to maintain the currently allocated uplink transmission resource configuration or request the change of the currently allocated uplink transmission resource configuration.

6. The method of claim 4, further comprising:
providing mapping between signal quality measurement results and uplink transmission resource configurations, wherein a first uplink transmission resource configuration comprises uplink transmission resources that are orthogonal with respect to other terminal devices and a second uplink transmission resource configuration comprises uplink transmission resources that are non-orthogonal with respect to other terminal devices;
when the signal quality measurement results associated with different base stations fall within a first margin defined by at least one threshold value, determining to request for the uplink transmission resources that are orthogonal with respect to other terminal devices; and
when the signal quality measurement results associated with different base stations indicate that one base station provides a signal quality higher than the other base stations by at least a second margin defined by a second threshold, determining to request for the uplink transmission resources that are non-orthogonal with respect to other terminal devices.

7. A method comprising:
allocating, by a network apparatus, to a terminal device a plurality of different uplink request resources comprising at least a first resource and a second resource;
receiving a request message from the terminal device in an uplink request resource;
if the request message was received in the first resource, maintaining uplink transmission resources of the terminal device and applying default procedures for processing the request message;
if the request message was received in the second resource, changing at least some of the uplink transmission resources of the terminal device and/or verifying that the terminal device has applied changes to the uplink transmission resources.

8. The method of claim 7, further comprising:
allocating to the terminal device a plurality of different uplink transmission resource configurations, wherein each uplink transmission resource configuration is linked with a different uplink request resource; and
upon reception of a request message in the second resource from the terminal device, causing transmission of a resource reconfiguration message that configures the terminal device to change to uplink transmission resources linked with the second resource.

9. An apparatus comprising:
at least one processor; and
at least one memory including a computer program code, wherein the at least one memory and the computer program code are configured, with the at least one processor, to cause the apparatus to:
store a plurality of different uplink transmission resource configurations and a plurality of different uplink request resources comprising at least a first resource and a second resource;
cause transmission of a request message in the first resource to request a base station to carry out default procedures for processing a request associated with the request message;
cause transmission of the request message in the second resource to request the base station to change a currently allocated uplink transmission resource configuration and/or to verify the change of the currently allocated uplink transmission resource configuration.

10. The apparatus of claim 9, wherein the at least one memory and the computer program code are configured, with the at least one processor, to cause the apparatus to:
determine whether to maintain currently allocated uplink transmission resource configuration or to request change of the currently allocated uplink transmission resource configuration;
upon determining to request the change of the currently allocated uplink transmission resource configuration, cause the transmission of the request message in the second resource.

11. The apparatus of claim 10, wherein the at least one memory and the computer program code are configured, with the at least one processor, to cause the apparatus to:
link each uplink transmission resource configuration to a different uplink request resource; and
identify the requested uplink transmission resource configuration with the uplink request resource in which the request message is caused to be transmitted.

12. The apparatus of any preceding claim 9 to 11, wherein the at least one memory and the computer program code are configured, with the at least one processor, to cause the apparatus to:
acquire a resource reconfiguration message originated from a network element and identifying newly allocated uplink transmission resource configuration;
cause transmission of an acknowledgment for the change of the uplink transmission resource configuration on a control channel associated with the resource reconfiguration message; and
verify the acknowledgment by transmitting a following request message on the second resource linked to the newly allocated uplink transmission resource configuration.

13. The apparatus of any preceding claim 9 to 12, wherein the at least one memory and the computer program code are configured, with the at least one processor, to cause the apparatus to:
cause reception signal quality measurements for signals received from a plurality of base stations;
compare the measured reception signal qualities with at least one threshold; and
determine, on the basis of said comparison, whether to maintain the currently allocated uplink transmission resource configuration or request the change of the currently allocated uplink transmission resource configuration.

14. The apparatus of claim 13, wherein the at least one memory and the computer program code are configured, with the at least one processor, to cause the apparatus to:
provide mapping between signal quality measurement results and uplink transmission resource configurations, wherein a first uplink transmission resource configuration comprises uplink transmission resources that are orthogonal with respect to other terminal devices and a second uplink transmission resource configuration comprises uplink transmission resources that are non-orthogonal with respect to other terminal devices;
when the signal quality measurement results associated with different base stations fall within a first margin defined by at least one threshold value, determine to request for the uplink transmission resources that are orthogonal with respect to other terminal devices; and
when the signal quality measurement results associated with different base stations indicate that one base station provides a signal quality higher than the other base stations by at least a second margin defined by a second threshold, determine to request for the uplink transmission resources that are non-orthogonal with respect to other terminal devices.

15. An apparatus comprising:
at least one processor; and
at least one memory including a computer program code, wherein the at least one memory and the computer program code are configured, with the at least one processor, to cause the apparatus to:
allocate to a terminal device a plurality of different uplink request resources comprising at least a first resource and a second resource;
acquire a request message originated from the terminal device and transferred in an uplink request resource;
if the request message was transferred in the first resource, maintain uplink transmission resources of the terminal device and apply default procedures for processing the request message;
if the request message was transferred in the second resource, change at least some of the uplink transmission resources of the terminal device and/or verify that the terminal device has applied changes to the uplink transmission resources.

16. The apparatus of claim 14, wherein the at least one memory and the computer program code are configured, with the at least one processor, to cause the apparatus to:
allocate to the terminal device a plurality of different uplink transmission resource configurations, wherein each uplink transmission resource configuration is linked with a different uplink request resource; and
upon acquiring a request message transferred in the second resource from the terminal device, cause transmission of a resource reconfiguration message that configures the terminal device to change to uplink transmission resources linked with the second resource.

17. An apparatus, comprising means configuring the apparatus to carry out the method according to any preceding claim 1 to 8.

18. A computer program product embodied on a distribution medium readable by a computer and comprising program instructions which, when loaded into an apparatus, execute the method according to any preceding claim 1 to 8.

## Patentansprüche

1. Verfahren, das die folgenden Schritte umfasst:
- Speichern in einer Terminalvorrichtung von einer Vielzahl von verschiedenen Konfigurationen von Uplinkübertragungsressourcen und einer Vielzahl von verschiedenen Uplinkanforderungsressourcen, die mindestens eine erste Ressource und eine zweite Ressource umfassen;
- Veranlassen einer Übertragung einer Anforderungsnachricht in der ersten Ressource, um eine Basisstation aufzufordern, ein Standardverfahren durchzuführen zur Verarbeitung einer Anforderung, die mit der Anforderungsnachricht verbunden ist;
- Veranlassen einer Übertragung der Anforderungsnachricht in der zweiten Ressource, um die Basisstation aufzufordern, eine aktuell zugeordnete Konfiguration der Uplinkübertragungsressource zu ändern und/oder die Änderung der aktuell zugeordneten Konfiguration der Uplinkübertragungsressource zu verifizieren.

2. Verfahren nach Anspruch 1,
das ferner folgende Schritte umfasst:
- Bestimmen in der Terminalvorrichtung, ob die aktuell zugeordnete Konfiguration der Uplinkübertragungsressourcen beibehalten oder eine Änderung der aktuell zugeordneten Konfiguration der Uplinkübertragungsressourcen angefordert werden soll;
- beim Bestimmen einer Anforderung, die aktuell zugewiesene Konfiguration der Uplinkübertragungsressource zu ändern, Veranlassen einer Übertragung der Anforderungsnachricht bei der zweiten Ressource.

3. Verfahren nach Anspruch 2,
das ferner folgende Schritte umfasst:
- Verbinden jeder Konfiguration der Uplinkübertragungsressourcen mit einer anderen Uplinkanforderungsressource; und
- Identifizieren der angeforderten Konfiguration der Uplinkübertragungsressource mit der Uplinkanforderungsressource, in der veranlasst wird, die Anforderungsnachricht zu übertragen.

4. Verfahren nach einem der vorhergehenden Ansprüche 1 bis 3,
das ferner folgende Schritte umfasst:
- Empfangen einer Ressourcenrekonfigurationsmeldung von einem Netzwerkelement, die eine neu zugewiesene Konfiguration der Uplinkübertragungsressourcen identifiziert;
- Veranlassen der Übertragung einer Bestätigung für die Änderung der Konfiguration der Uplinkübertragungsressourcen auf einem Steuerkanal, der der Ressourcenrekonfigurationsmeldung zugeordnet ist; und
- Verifizieren der Bestätigung durch Übertragen einer sich anschließenden Anforderungsnachricht auf die zweite Ressource, die mit der neu zugewiesenen Konfiguration der Uplinkübertragungsressourcen verbunden ist.

5. Verfahren nach einem vorhergehenden Anspruch,
das ferner folgende Schritte umfasst:
- Veranlassen von Messungen der Empfangssignalqualität von Signalen, die von einer Vielzahl von Basisstationen empfangen werden;
- Vergleichen der gemessenen Empfangssignalqualitäten mit mindestens einem Schwellenwert; und
- Bestimmen, auf der Grundlage des Vergleichs, ob die aktuell zugewiesene Konfiguration von Uplinkübertragungsressourcen beibehalten oder eine Änderung der aktuell zugewiesenen Konfiguration von Uplinkübertragungsressourcen angefordert werden soll.

6. Verfahren nach Anspruch 4,
das ferner folgende Schritte umfasst:
- Bereitstellen einer Zuordnung zwischen Signalqualitätsmessergebnissen und Konfigurationen von Uplinkübertragungsressourcen,
wobei eine erste Konfiguration von Uplinkübertragungsressourcen Uplinkübertragungsressourcen umfasst, die orthogonal in Bezug auf andere Terminalvorrichtungen sind, und eine zweite Konfiguration von Uplinkübertragungsressourcen Uplinkübertragungsressourcen umfasst, die in Bezug auf andere Terminalvorrichtungen nicht orthogonal sind;
- wobei, wenn die den verschiedenen Basisstationen zugeordneten Messergebnisse der Signalqualität innerhalb eines ersten Bereichs liegen, der durch mindestens einen Schwellenwert definiert ist, bestimmt wird, dass die Uplinkübertragungsressourcen angefordert werden, die in Bezug auf andere Terminalvorrichtungen orthogonal sind; und
- wobei, wenn die den verschiedenen Basisstationen zugeordneten Messergebnisse der Signalqualität anzeigen, dass eine Basisstation eine Signalqualität bereitstellt, die um mindestens einen zweiten Bereich höher ist als die anderen Basisstationen, der durch einen zweiten Schwellenwert definiert ist, bestimmt wird, dass die Uplinkübertragungsressourcen angefordert werden, die im Vergleich zu anderen Terminalvorrichtungen nicht orthogonal sind.

7. Verfahren, das folgende Schritte umfasst:
- Zuweisen einer Vielzahl von verschiedenen Uplinkanforderungsressourcen, die mindestens eine erste Ressource und eine zweite Ressource umfassen, zu einer Terminalvorrichtung über eine Netzwerkvorrichtung;
- Empfangen einer Anforderungsnachricht von der Terminalvorrichtung in einer Uplinkanforderungsressource;
- sofern die Anforderungsnachricht in der ersten Ressource empfangen wird, Beibehalten der Uplinkübertragungsressourcen der Terminalvorrichtung und Anwenden von Standardverfahren zum Verarbeiten der Anforderungsnachricht;
- sofern die Anforderungsnachricht in der zweiten Ressource empfangen wird, Ändern von zumindest einigen der Uplinkübertragungsressourcen der Terminalvorrichtung und/oder Verifizieren, ob die Terminalvorrichtung Änderungen an den Uplinkübertragungsressourcen vorgenommen hat.

8. Verfahren nach Anspruch 7,
das ferner folgende Schritte umfasst:
- Zuweisen einer Vielzahl von verschiedenen Konfigurationen von Uplinkübertragungsressourcen an die Terminalvorrichtung,
wobei jede Konfiguration von Uplinkübertragungsressourcen mit einer anderen Uplinkanforderungsressource verbunden ist; und
- beim Empfang einer Anforderungsnachricht in der zweiten Ressource vom Terminal, Veranlassen einer Übertragung der Ressourcenrekonfigurationsmeldung, die die Terminalvorrichtung derart konfiguriert, dass die Uplinkübertragungsressourcen, die mit der zweiten Ressource verbunden sind, geändert werden.

9. Vorrichtung, die Folgendes aufweist:
mindestens einen Prozessor; und
mindestens einen Speicher, der einen Computerprogrammcode beinhaltet, wobei der mindestens eine Speicher und der Computerprogrammcode derart konfiguriert sind, dass mit dem mindestens einen Prozessor die Vorrichtung zu Folgendem veranlasst wird:
- Speichern einer Vielzahl von verschiedenen Konfigurationen von Uplinkübertragungsressourcen und einer Vielzahl von verschiedenen Uplinkanforderungsressourcen, die mindestens eine erste Ressource und eine zweite Ressource umfassen;
- Veranlassen einer Übertragung einer Anforderungsnachricht in der ersten Ressource, um eine Basisstation anzufordern, ein Standardverfahren zur Verarbeitung einer mit der Anforderungsnachricht verbundenen Anforderung durchzuführen;
- Veranlassen der Übertragung der Anforderungsnachricht in der zweiten Ressource, die Basisstation aufzufordern, eine aktuell zugeordnete Konfiguration der Uplinkübertragungsressource zu ändern und/oder die Änderung der aktuell zugeordneten Konfiguration der Uplinkübertragungsressource zu verifizieren.

10. Vorrichtung nach Anspruch 9,
wobei der mindestens eine Speicher und der Computerprogrammcode mit dem mindestens einen Prozessor derart konfiguriert sind, die Vorrichtung zu Folgendem zu veranlassen:
- Bestimmen, ob die aktuell zugewiesene Konfiguration von Uplinkübertragungsressourcen beibehalten oder eine Änderung der aktuell zugewiesenen Konfiguration der Uplinkübertragungsressource angefordert werden soll;
- nach dem Bestimmen eines Anforderns, die aktuell zugewiesene Konfiguration der Uplinkübertragungsressource zu ändern, Veranlassen der Übertragung der Anforderungsnachricht in der zweiten Ressource.

11. Vorrichtung nach Anspruch 10,
wobei der mindestens eine Speicher und der Computerprogrammcode mit dem mindestens einen Prozessor derart konfiguriert sind, die Vorrichtung zu Folgendem zu veranlassen:
- Verbinden von jeder Konfiguration der Uplinkübertragungsressourcen mit einer anderen Uplinkanforderungsressource; und
- Identifizieren der angeforderten Konfiguration der Uplinkübertragungsressource mit der Uplinkanforderungsressource, in der die Anforderungsnachricht übertragen wird.

12. Vorrichtung nach einem der vorhergehenden Ansprüche 9 bis 11,
wobei der mindestens eine Speicher und der Computerprogrammcode mit dem mindestens einen Prozessor derart konfiguriert sind, die Vorrichtung zu Folgendem zu veranlassen:
- Erfassen einer Ressourcenrekonfigurationsmeldung, die von einem Netzwerkelement stammt und eine neu zugeordnete Konfiguration der Uplinkübertragungsressource identifiziert;
- Veranlassen einer Übertragung einer Bestätigung für die Änderung der Konfiguration der Uplinkübertragungsressource auf einem Steuerkanal, der der Ressourcenrekonfigurationsmeldung zugeordnet ist; und
- Verifizieren der Bestätigung durch Übertragen einer darauffolgenden Anforderungsnachricht auf der zweiten Ressource, die mit der neu zugewiesenen Konfiguration der Uplinkübertragungsressource verbunden ist.

13. Vorrichtung nach einem der vorhergehenden Ansprüche 9 bis 12,
wobei der mindestens eine Speicher und der Computerprogrammcode mit dem mindestens einen Prozessor derart konfiguriert sind, die Vorrichtung zu Folgendem zu veranlassen:
- Veranlassen von Messungen der Empfangssignalqualität für Signale, die von einer Vielzahl von Basisstationen empfangen werden;
- Vergleichen der gemessenen Empfangssignalqualitäten mit mindestens einem Schwellenwert; und
- Bestimmen, auf der Grundlage des Vergleichs, ob die aktuell zugewiesene Konfiguration der Uplinkübertragungsressource beibehalten oder eine Änderung der aktuell zugewiesenen Konfiguration von Uplinkübertragungsressourcen angefordert werden soll.

14. Vorrichtung nach Anspruch 13,
wobei der mindestens eine Speicher und der Computerprogrammcode mit dem mindestens einen Prozessor derart konfiguriert sind, die Vorrichtung zu Folgendem zu veranlassen:
- Bereitstellen einer Zuordnung zwischen Signalqualitätsmessergebnissen und Konfigurationen der Uplinkübertragungsressource,
wobei eine erste Konfiguration der Uplinkübertragungsressource Uplinkübertragungsressourcen umfasst, die orthogonal in Bezug auf andere Terminalvorrichtungen sind, und eine zweite Konfiguration der Uplinkübertragungsressource Uplinkübertragungsressourcen umfasst, die in Bezug auf andere Terminalvorrichtungen nicht orthogonal sind;
- wobei, wenn die den verschiedenen Basisstationen zugeordneten Messergebnisse der Signalqualität innerhalb eines ersten Bereichs liegen, der durch mindestens einen Schwellenwert definiert ist, bestimmt wird, dass die Uplinkübertragungsressourcen angefordert werden, die in Bezug auf andere Terminalvorrichtungen orthogonal sind; und
- wobei, wenn die den verschiedenen Basisstationen zugeordneten Mess-ergebnisse der Signalqualität anzeigen, dass eine Basisstation eine Signalqualität bereitstellt, die um mindestens einen zweiten Bereich höher ist als die anderen Basisstationen, der durch einen zweiten Schwellenwert definiert ist, bestimmt wird, dass die Uplinkübertragungsressourcen angefordert werden, die im Vergleich zu anderen Terminalvorrichtungen nicht orthogonal sind.

15. Vorrichtung, die Folgendes aufweist:
mindestens einen Prozessor; und
mindestens einen Speicher, der einen Computerprogrammcode beinhaltet, wobei der mindestens eine Speicher und der Computerprogrammcode mit dem mindestens einen Prozessor derart konfiguriert sind, die Vorrichtung zu Folgendem zu veranlassen:
- Zuweisen einer Terminalvorrichtung zu einer Vielzahl von verschiedenen Uplinkanforderungsressourcen, die mindestens eine erste Ressource und eine zweite Ressource umfassen;
- Erfassen einer Anforderungsnachricht, die von der Terminalvorrichtung stammt und in einer Uplinkanforderungsressource übertragen wird;
- sofern die Anforderungsnachricht in der ersten Ressource empfangen wird, Beibehalten der Uplinkübertragungsressourcen der Terminalvorrichtung und Anwenden von Standardverfahren zum Verarbeiten der Anforderungsnachricht;
- sofern die Anforderungsnachricht in der zweiten Ressource empfangen wird, Ändern von zumindest einigen der Uplinkübertragungsressourcen der Terminalvorrichtung und/oder Verifizieren, ob die Terminalvorrichtung Änderungen an den Uplinkübertragungsressourcen vorgenommen hat.

16. Vorrichtung nach Anspruch 14,
wobei der mindestens eine Speicher und der Computerprogrammcode mit dem mindestens einen Prozessor derart konfiguriert sind, die Vorrichtung zu Folgendem zu veranlassen:
- Zuweisen einer Vielzahl von verschiedenen Konfigurationen von Uplinkübertragungsressourcen an die Terminalvorrichtung,
wobei jede Konfiguration von Uplinkübertragungsressourcen mit einer anderen Uplinkanforderungsressource verbunden ist; und
- beim Empfang einer Anforderungsnachricht in der zweiten Ressource vom Terminal, Veranlassen einer Übertragung der Ressourcenrekonfigurationsmeldung, die die Terminalvorrichtung derart konfiguriert, dass die Uplinkübertragungsressourcen, die mit der zweiten Ressource verbunden sind, geändert werden.

17. Vorrichtung, die Einheiten aufweist, die die Vorrichtung konfigurieren, um das Verfahren nach einem vorhergehenden Anspruch 1 bis 8 durchzuführen.

18. Computerprogrammprodukt, das auf einem von einem Computer lesbaren Verteilungsmedium untergebracht ist und Programmanweisungen umfasst, die, beim Laden in eine Vorrichtung, zum Ausführen des Verfahrens nach einem der vorhergehenden Ansprüche 1 bis 8 führen.

## Revendications

1. Procédé comprenant :
le stockage, dans un dispositif de terminal, d'une pluralité de configurations différentes de ressources de transmission de liaison montante et d'une pluralité de ressources différentes de requête de liaison montante comprenant au moins une première ressource et une deuxième ressource ;
provoquer la transmission d'un message de requête dans la première ressource afin de solliciter d'une station de base qu'elle effectue des procédures par défaut de traitement d'une requête associée au message de requête ;
provoquer la transmission du message de requête dans la deuxième ressource afin de solliciter d'une station de base qu'elle change une configuration de ressource de transmission de liaison montante en cours d'allocation et/ou qu'elle vérifie le changement de la configuration de ressource de transmission de liaison montante en cours d'allocation.

2. Procédé selon la revendication 1, comprenant en outre :
le calcul, au niveau du dispositif de terminal, de savoir si on maintient la configuration de ressource de transmission de liaison montante en cours d'allocation ou si on sollicite le changement de la configuration de ressource de transmission de liaison montante en cours d'allocation ;
lorsqu'il a été décidé de solliciter le changement de la configuration de ressource de transmission de liaison montante en cours d'allocation, provoquer la transmission du message de requête dans la deuxième ressource.

3. Procédé selon la revendication 2, comprenant en outre :
la mise en liaison de chaque configuration de ressource de transmission de liaison montante avec une ressource de requête de liaison montante différente ; et
l'identification de la configuration de ressource de liaison montante requise avec la ressource de requête de liaison montante dans laquelle la transmission du message de requête est provoquée.

4. Procédé selon l'une quelconque des revendications 1 à 3, comprenant en outre :
la réception en provenance d'un élément de réseau d'un message de reconfiguration de ressource identifiant une configuration de ressource de transmission de liaison montante nouvellement allouée ;
la provocation de la transmission d'un accusé par rapport au changement de la configuration de ressource de transmission de liaison montante sur un canal de contrôle associé au message de reconfiguration de ressource ; et
la vérification de l'accusé en transmettant un message de requête suivant dans la deuxième ressource liée à la nouvelle configuration de ressource de transmission de liaison montante nouvellement allouée.

5. Procédé selon l'une quelconque des revendications précédentes, comprenant en outre :
la provocation de mesures de qualité de réception de signaux reçus en provenance d'une pluralité de stations de base ;
la comparaison des qualités de signaux de réception mesurées avec au moins un seuil ; et
le calcul, sur la base de ladite comparaison, pour savoir si on maintient la configuration de ressource de transmission de liaison montante en cours d'allocation ou si on sollicite le changement de la configuration de ressource de transmission de liaison montante en cours d'allocation.

6. Procédé selon la revendication 4, comprenant en outre :
la fourniture d'une correspondance entre des résultats de mesures de qualité de signal et des configurations de ressources de transmission de liaison montante, selon lequel une première configuration de ressource de transmission de liaison montante comprend des ressources de transmission de liaison montante qui sont orthogonales par rapport aux autres dispositifs de terminal et une deuxième configuration de ressource de transmission de liaison montante comprend des ressources de transmission de liaison montante qui ne sont pas orthogonales par rapport aux autres dispositifs de terminal ;
lorsque les résultats de mesures de qualité de signal associés aux différentes stations de base se situent dans une première marge définie par au moins une valeur seuil, décider de solliciter les ressources de transmission de liaison montante qui sont orthogonales par rapport aux autres dispositifs de terminal ; et
lorsque les résultats de mesures de qualité de signal associés aux différentes stations de base indiquent qu'une station de base fournit une qualité de signal meilleure que les autres stations de base par au moins une deuxième marge définie par un deuxième seuil, décider de solliciter les ressources de transmission de liaison montante qui ne sont pas orthogonales par rapport aux autres dispositifs de terminal.

7. Procédé comprenant :
l'allocation, par le biais d'un équipement réseau, à un dispositif de terminal, d'une pluralité de ressources différentes de requête de liaison montante comprenant au moins une première ressource et une deuxième ressource ;
la réception d'un message de requête en provenance du dispositif de terminal dans une ressource de requête de liaison montante ;
si le message de requête a été reçu dans la première ressource, le maintien des ressources de transmission de liaison montante du dispositif de terminal et l'application des procédures par défaut de traitement du message de requête ;
si le message de requête a été reçu dans la deuxième ressource, le changement d'au moins certaines des ressources de transmission de liaison montante du dispositif de terminal, et/ou la vérification que le dispositif de terminal a appliqué les changements aux ressources de transmission de liaison montante.

8. Procédé selon la revendication?, comprenant en outre :
l'allocation au dispositif de terminal d'une pluralité de configurations différentes de ressources de transmission de liaison montante, selon lequel chaque configuration de ressource de transmission de liaison montante est liée avec une ressource de requête de liaison montante différente ; et
lors de la réception d'un message de requête dans la deuxième ressource en provenance du dispositif de terminal, la provocation de la transmission d'un message de reconfiguration de ressource qui configure le dispositif de terminal pour changer les ressources de transmission de liaison montante liées à la deuxième ressource.

9. Équipement comprenant :
au moins un processeur ; et
au moins une mémoire comportant un code de programme d'ordinateur, selon lequel la au moins une mémoire et le code de programme d'ordinateur sont configurés, avec le au moins un processeur, d'avoir pour effet de faire fonctionner l'équipement pour :
stocker une pluralité de configurations différentes de ressources de transmission de liaison montante et une pluralité de ressources différentes de requête de liaison montante comprenant au moins une première ressource et une deuxième ressource ;
provoquer la transmission d'un message de requête dans la première ressource afin de solliciter d'une station de base qu'elle effectue des procédures par défaut de traitement d'une requête associée au message de requête ;
provoquer la transmission du message de requête dans la deuxième ressource afin de solliciter d'une station de base qu'elle change une configuration de ressource de transmission de liaison montante en cours d'allocation et/ou qu'elle vérifie le changement de la configuration de ressource de transmission de liaison montante en cours d'allocation.

10. Équipement selon la revendication 9, selon lequel la au moins une mémoire et le code de programme d'ordinateur sont configurés, avec le au moins un processeur, d'avoir pour effet de faire fonctionner l'équipement pour :
décider de maintenir la configuration de ressource de transmission de liaison montante en cours d'allocation ou de solliciter le changement de la configuration de ressource de transmission de liaison montante en cours d'allocation ;
lorsqu'il a été décidé de solliciter le changement de la configuration de ressource de transmission de liaison montante en cours d'allocation, provoquer la transmission du message de requête dans la deuxième ressource.

11. Équipement selon la revendication 10, selon lequel le au moins une mémoire et le code de programme d'ordinateur sont configurés, avec le au moins un processeur, d'avoir pour effet de faire fonctionner l'équipement pour :
mettre en liaison chaque configuration de ressource de transmission de liaison montante avec une ressource de requête de liaison montante différente ; et
identifier la configuration de ressource de liaison montante requise avec la ressource de requête de liaison montante dans laquelle la transmission du message de requête est provoquée.

12. Équipement selon l'une quelconque des revendications 9 à 11 précédentes, selon lequel la au moins une mémoire et le code de programme d'ordinateur sont configurés, avec le au moins un processeur, d'avoir pour effet de faire fonctionner l'équipement pour :
acquérir la configuration de ressource de transmission de liaison montante en cours d'allocation originaire d'un élément de réseau et d'identifier une configuration de ressource de transmission de liaison montante nouvellement allouée ;
provoquer la transmission d'un accusé par rapport au changement de la configuration de ressource de transmission de liaison montante sur un canal de contrôle associé au message de reconfiguration de ressource ; et
vérifier l'accusé en transmettant un message de requête suivant dans la deuxième ressource liée à la nouvelle configuration de ressource de transmission de liaison montante nouvellement allouée.

13. Équipement selon l'une quelconque des revendications 9 à 12 précédentes, selon lequel la au moins une mémoire et le code de programme d'ordinateur sont configurés, avec le au moins un processeur, d'avoir pour effet de faire fonctionner l'équipement pour :
provoquer des mesures de qualité de réception de signaux reçus en provenance d'une pluralité de stations de base ;
comparer les qualités de signaux de réception mesurées avec au moins un seuil ; et
décider, sur la base de ladite comparaison, du maintien de la configuration de ressource de transmission de liaison montante en cours d'allocation ou de solliciter le changement de la configuration de ressource de transmission de liaison montante en cours d'allocation.

14. Équipement selon la revendication 13, selon lequel la au moins une mémoire et le code de programme d'ordinateur sont configurés, avec le au moins un processeur, d'avoir pour effet de faire fonctionner l'équipement pour :
fournir une correspondance entre les résultats de mesure de qualité de signal et les configurations de ressource de transmission de liaison montante, selon lequel une première configuration de ressource de transmission de liaison montante comprend des ressources de transmission de liaison montante qui sont orthogonales par rapport aux autres dispositifs de terminal et une deuxième configuration de ressource de transmission de liaison montante comprend des ressources de transmission de liaison montante qui ne sont pas orthogonales par rapport aux autres dispositifs de terminal ;
lorsque les résultats de mesures de qualité de signal associés aux différentes stations de base se situent dans une première marge définie par au moins une valeur seuil, décider de solliciter les ressources de transmission de liaison montante qui sont orthogonales par rapport aux autres dispositifs de terminal ; et
lorsque les résultats de mesures de qualité de signal associés aux différentes stations de base indiquent qu'une station de base fournit une qualité de signal meilleure que les autres stations de base par au moins une deuxième marge définie par un deuxième seuil, décider de solliciter les ressources de transmission de liaison montante qui ne sont pas orthogonales par rapport aux autres dispositifs de terminal.

15. Équipement comprenant :
au moins un processeur ; et
au moins une mémoire comportant un code de programme d'ordinateur, selon lequel la au moins une mémoire et le code de programme d'ordinateur sont configurés, avec le au moins un processeur, d'avoir pour effet de faire fonctionner l'équipement pour :
allouer, à un dispositif de terminal, une pluralité de ressources différentes de requête de liaison montante comprenant au moins une première ressource et une deuxième ressource ;
acquérir un message de requête originaire du dispositif de terminal et transféré dans une ressource de requête de liaison montante ;
si le message de requête a été transféré dans la première ressource, maintenir des ressources de transmission de liaison montante du dispositif de terminal et appliquer des procédures par défaut de traitement du message de requête ;
si le message de requête a été transféré dans la deuxième ressource, changer au moins certaines des ressources de transmission de liaison montante du dispositif de terminal, et/ou vérifier que le dispositif de terminal a appliqué les changements aux ressources de transmission de liaison montante.

16. Équipement selon la revendication 14, selon lequel la au moins une mémoire et le code de programme d'ordinateur sont configurés, avec le au moins un processeur, d'avoir pour effet de faire fonctionner l'équipement pour :
allouer au dispositif de terminal une pluralité de configurations différentes de ressources de transmission de liaison montante, selon lequel chaque configuration de ressource de transmission de liaison montante est liée avec une ressource de requête de liaison montante différente ; et
lors de l'acquisition d'un message de requête transféré dans la deuxième ressource en provenance du dispositif de terminal, provoquer la transmission d'un message de reconfiguration de ressource qui configure le dispositif de terminal pour changer les ressources de transmission de liaison montante liées à la deuxième ressource.

17. Équipement, comprenant des moyens de configuration de l'équipement pour mettre en oeuvre le procédé selon l'une quelconque des revendications 1 à 8 précédentes.

18. Produit de programme d'ordinateur incorporé dans un moyen de distribution lisible par ordinateur et comprenant des instructions de programme d'ordinateur qui, lorsque chargées dans un équipement, exécute le procédé selon l'une quelconque des revendications 1 à 8 précédentes.
